# EUROPÄISCHE PATENTSCHRIFT

(11) **EP 1 794 649 B1**
(45) Veröffentlichungstag und Bekanntmachung des Hinweises auf die Patenterteilung: **23.02.2011**
(21) Anmeldenummer: 05786055.3
(22) Anmeldetag: 27.09.2005
(51) Int. Cl.: G03B 17/56, F16M 11/02, F16M 11/04

(54) **BEFESTIGUNGSVORRICHTUNG ZUR BEFESTIGUNG VON KAMERAS UND ANDEREN OPTISCHEN GERÄTEN AN STATIVEN ODER ZUM VERBINDEN MIT ANDEREN ZUBEHÖRTEILEN**
FIXING DEVICE FOR FIXING CAMERAS AND OTHER OPTICAL DEVICES TO STANDS OR FOR CONNECTION TO OTHER ACCESSORIES
DISPOSITIF DE FIXATION SERVANT À FIXER DES APPAREILS DE PRISE DE VUE ET D'AUTRES APPAREILS OPTIQUES SUR DES STATIFS, OU À RACCORDER DES APPAREILS DE PRISE DE VUE ET D'AUTRES APPAREILS OPTIQUES AVEC DES ACCESSOIRES

(30) Priorität: 27.09.2004 DE 202004015006 U
(43) Veröffentlichungstag der Anmeldung: 13.06.2007
(73) Patentinhaber: Velbon Kabushiki Kaisha, Nakano-ku Tokyo 165-0027 (JP)
(72) Erfinder: MÜLLER, Jochen, 82166 Gräfelfing (DE)
(74) Vertreter: von Eichel-Streiber, Caspar
(86) Internationale Anmeldenummer: PCT/EP2005/010427
(87) Internationale Veröffentlichungsnummer: WO 2006/040005

(56) Entgegenhaltungen:
- GB-A- 2 052 782
- US-A- 2 824 503
- US-A- 3 549 113
- US-B1- 6 460 815
- PATENT ABSTRACTS OF JAPAN Bd. 017, Nr. 539 (P-1621), 28. September 1993 (1993-09-28) & JP 05 150352 A (SONY CORP), 18. Juni 1993 (1993-06-18)
- PATENT ABSTRACTS OF JAPAN Bd. 2000, Nr. 26, 1. Juli 2002 (2002-07-01) -& JP 2001 264861 A (ASAHI OPTICAL CO LTD), 26. September 2001 (2001-09-26)

## Beschreibung

Zur schnelleren Befestigung von Kameras und anderen optischen Geräten an Stativen oder zum Verbinden mit anderen Zubehörteilen gibt es als Befestigungsvorrichtungen sogenannte Schnellwechseladapter. Diese bestehen im Wesentlichen aus zwei Teilen: Ein Adapterteil, das im Stativgewinde der Kamera oder anderen optischen Geräte befestigt ist und ein Aufnahmeteil, das auf ein Stativ oder anderes Zubehörteil geschraubt wird. Zur sicheren aber lösbaren Verbindung von Kamera und Stativ wird der Adapter in das Aufnahmeteil geschoben und dort verriegelt.

Die Mehrzahl der gegenwärtigen Lösungen basiert auf dem Blockieren einer Trapezführung. Diese Vorrichtungen sind relativ groß und schwer, was insbesondere für das unter der Kamera etc. verbleibende Adapterteil ins Gewicht fällt. Der Einschub ineinander ist nur in einer Richtung möglich, die Geräte müssen daher vor der Verbindung genau ausgerichtet werden.

Es gibt auch Lösungen mit rundem Adapterteil. Eine besonders kleine auf dem Markt befindliche Vorrichtung ist die "mini conect" der Fa. Novoflex. Der Adapterzapfen weist hier einen Durchmesser von 24 mm auf bei einer Höhe von 6 mm. Diese Ausführung hat aber - abgesehen von der Größe - gravierende Nachteile: Über eine Schräge am Adapter wird dieser mit einen Hebel im Aufnahmeteil einseitig in diesem verklemmt, wobei der Hebel exzentrisch zur Mitte des Aufnameteils weit aus dem Gehäuse schwingt und in dieser Position auch nach der Arretierung verbleibt. Die Herstellerfirma warnt deshalb in ihrer Bedienungsanleitung davor, den Hebel zu berühren, weil sonst die Gefahr einer unbeabsichtigen Lösung von Kamera und Stativ besteht - insbesondere, wenn die Kamera mit Stativ (oder Schulterstütze) getragen wird. Desweiteren ist der Adapter, wenn er bereits in das Aufnahmeteil eingeführt wurde, in der Aussparung noch verschiebbar. Das führt im ungünstigen Fall dazu, dass der Verriegelungshebel den Adapter nur auf einer Fläche von etwas mehr als 2 mm2 festhält. Dies ist sehr bedenklich angesichts der Tatsache, dass Kamera-/Objektivkombinationen leicht mehrere Kilo wiegen. Hinzu kommt, dass bei diesem Gerät - solange die Kamera nicht verriegelt ist - kein Schutz gegen zufälliges Herausfallen gegeben ist. In arretiertem Zustand kann durch Einwirken mittlerer Drehkraft auf das Kameragehäuse die Verriegelung gelockert werden.

Angesichts neuer technischer Erfordernisse durch die zunehmende Verbreitung von kleinen und kleinsten Digitalkameras muss auch die Größe der Schnellbefestigungen neu bewertet werden. Digitalkameras haben, um möglichst klein bauen zu können, Funktionsteile wie Batteriegehäuse oder Speicherkartenfächer häufig an ihrer Unterseite, oft unmittelbar neben dem Stativgewinde. Adapter mit einem Durchmesser von deutlich mehr als dem des Gewindeeinsatzes solcher Kameras (ca. 10 mm) müssen also immer wieder abgeschraubt werden, um diese Teile erreichen zu können. Damit wird ein Großteil ihrer Gebrauchsvorteile - nämlich der gewonnene Zeit durch das schnelle Kuppeln - aber wieder zunichte gemacht. Darüber hinaus befindet sich bei vielen Kameras das Gewinde am äußersten Gehäuserand, hier ist eine stabile Verriegelung mit einem über den Rand hinausragenden Adapter nicht mehr gewährleistet.

Schließlich spielt die Größe des Adapters auch bei Aufbewahrung und Transport eine Rolle: Da er, um seinen hauptsächlichen Vorteil voll nutzen zu können, ständig unter der Kamera bleiben sollte, ist dies dann nicht möglich, wenn die Kamera mit angesetztem Adapter nicht mehr in die Kamera- oder Hemd- bzw. Hosentasche passt - was besonders bei den kleinen Digitalkameras infrage kommt - oder wenn seine Größe in sozusagen "häßlichem" Mißverhältnis zum zierlichen Design einer Kamera steht.

Aufgabe der Erfindung ist also die Schaffung einer Schnellbefestigungsvorrichtung, die klein genug ist, um nicht sonstige Funktionen zu behindern, die eine spontane Zusammenführung von Kamera und Stativ ohne spezielle vorherige Ausrichtung erlaubt, die mechanisch stabil auch schwere Kamera/-Objektivkombinationen hält und gegen Fehlbedienungen gesichert werden kann. Schließlich sollte der Adapter mit dem Design moderner Digitalkameras harmonieren als Voraussetzung für ständigen Verbleib am Gehäuse.

Diese Aufgabe wird durch die Merkmale des Anspruchs 1 gelöst. Vorteilhafte Ausgestaltungen der Erfindung sind den Unteransprüchen zu entnehmen.

Als Vorteile der vorliegenden Erfindung sind anzusehen, dass für den Adapterzapfen nur ein Durchmesser von 14 mm und eine Höhe von 4 mm benötigt wird. Das Zusammenführen von Adapter und Aufnahmeeinheit kann zudem in jeder beliebigen horizontalen Ausrichtung der Kamera erfolgen. Die Verriegelungskraft wirkt auf ca. 2/3 der umlaufenden Haltefläche des Adapterzapfens (ca. 50 mm²) und von zwei gegenüberliegenden Seiten gleichzeitig.

Nach Aufnahme der Kamera im Adaptergehäuse wird der Zapfen automatisch gegen Herausfallen gesichert. Der Verriegelungshebel bewegt sich konzentrisch zur Mitte der Aufnahmeeinheit, ragt daher immer im gleichem, nur zum Betätigen notwendigen Abstand aus dem Gehäuse und ist in jeder Position gegen unbeabsichtigtes Lösen feststellbar.

Nachfolgend wird ein Ausführungsbeispiel der Erfindung anhand der Zeichnung erläutert.

Es zeigt:
- Fig. 1: eine Ansicht des unteren Teils der Befestigungs-Vorrichtung von oben,
- Fig. 2: eine Ansicht des oberen Teils der Befestigungs-Vorrichtung von unten,
- Fig. 3: einen Aufsichts-Schnitt durch die Befestigungs-Vorrichtung bei entspannter Sicherungsfeder,
- Fig. 4: einen mittig horizontalen Schnitt durch die Befestigungs-Vorrichtung in Höhe des Verriegelungshebels bei gespannter Sicherungsfeder (Aufnahmeposition),
- Fig. 5: ein vertikaler Schnitt durch die Befestigungs-Vorrichtung in Höhe des Verriegelungshebels,
- Fig. 5A: eine vergrößerte Darstellung der Fig. 5,
- Fig. 6: ein vertikaler Schnitt durch die Befestigungs-Vorrichtung in Höhe des Stoppstifts,
- Fig. 7: in Explosionsdarstellung die Anordnung der Einzelelemente aus Fig. 6,
- Fig. 8: in Explosionsdarstellung die Anordnung der Einzelelemente aus Fig. 5,
- Fig. 9: eine teilweise aufgebrochene Zusammenbauzeicnung bei nach oben gedrücktem inneren Tubus (Aufnahmeposition),
- Fig. 10: eine perspektivische Einzelteilzeichnung der oberen Gehäuseplatte,
- Fig. 11: eine perspektivische Einzelteilzeichnung des Innenrings,
- Fig. 12: eine perspektivische Einzelteilzeichnung des inneren Tubus,
- Fig. 13: eine perspektivische Einzelteilzeichnung des Verriegelungshebels, und
- Fig. 14: eine perspektivische Einzelteilzeichnung des Außenrings.

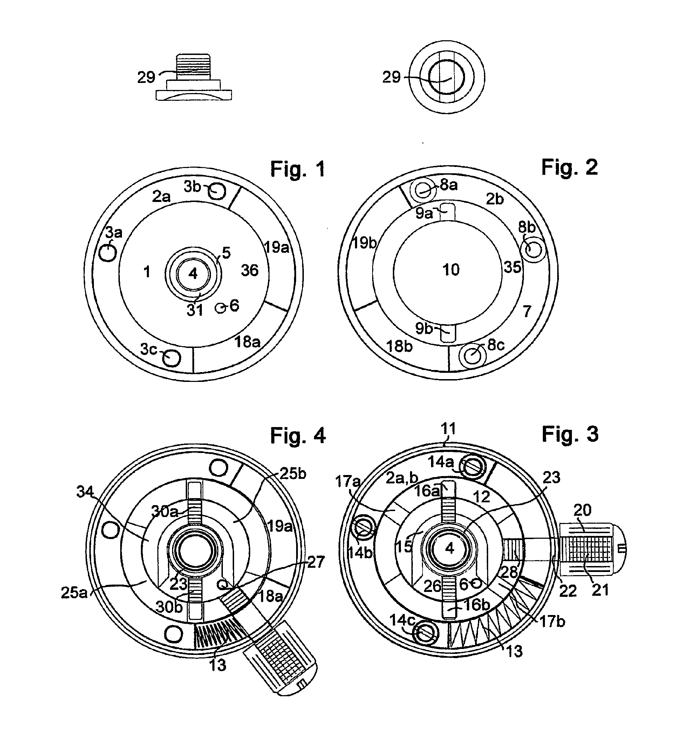

Die Schnellbefestigungs-Vorrichtung besteht aus zwei Haupt-Teilen: Einem in das Gewinde an der nicht dargestellten Kamera einzuschraubenden Adapterzapfen 29 und einer Aufnahmeeinheit 34, dargestellt im Detail insbesondere in den Fig. 3, 4, 7 und 8.

Wesentliches Merkmal der Aufnahmeeinheit 34 ist ein innerer Tubus 26, der den Adapterzapfen 29 aufnimmt. Dazu ist eine Seite des inneren Tubus 26 mit einer Einschuböffnung 15 ähnlich wie ein Blitzschuh ausgebildet, d.h. mit einer bis auf die an einer Seite geöffnete Einschuböffnung 15 umlaufenden übergreifenden Kante, unter die der Adapterzapfen 29 geschoben wird. Auf der anderen Seite besitzt der innere Tubus 26 eine Aussparung 26a zur Aufnahme einer Druckfeder 23. An den runden Seiten des inneren Tubus 26 sind gegenüberliegend zwei Verriegelungsstifte 16a bzw. 16b vorgesehen.

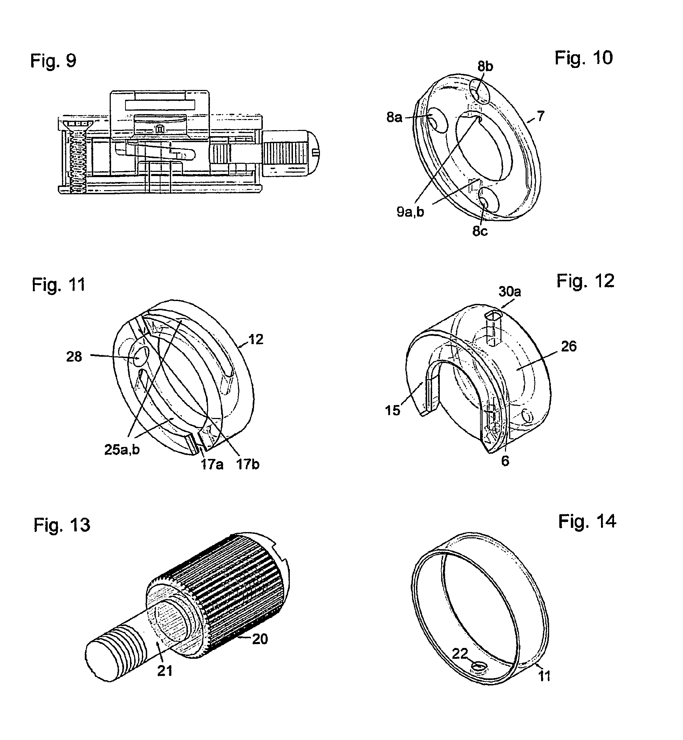

Die Fign. 3, und 4 zeigen, dass der innere Tubus 26 von einem Innenring 12 umgeben ist. Dieser Innenring 12 weist als wesentliches Merkmal gegenüberliegend seitlich je einen in Längsrichtung schräg zur der Ringober- bzw. -unterkante verlaufenden Schlitz 25a bzw. 25b auf und oben am Beginn der Schlitze 25a und 25b je eine entsprechende Öffnung 17a bzw. 17b, die mit dem Schlitz 25a bzw. 25b verbunden ist und in diesen übergeht, wie insbesondere aus der Einzelteilzeichnung gemäß Fig. 11 zu ersehen ist. Diese Öffnungen 17a bzw. 17b dienen zur Aufnahme der Verriegelungsstifte 16a bzw. 16b, wenn der innere Tubus 26 in der Mittelöffnung des Innenrings 12 abwärts bewegt wird.

Mit dem Innenring 12 verbunden ist ein Verriegelungshebel 21.

Aus dieser Anordnung ergibt sich als wesentliches Funktionsprinzip der Erfindung, dass sobald die Verriegelunsstifte 16a und 16b am Innentubus 26 in den Schlitzen 17a und 17b an der Oberseite des Innenrings 12 versenkt sind und der Verriegelungshebel 21 betätigt wird, der Innenring 12 und die Schlitze 25 gedreht werden und dabei mit ihrer Schräge an den Schlitzen 25 die Stifte 17a und 17b und damit den Innentubus 26 nach unten drücken.

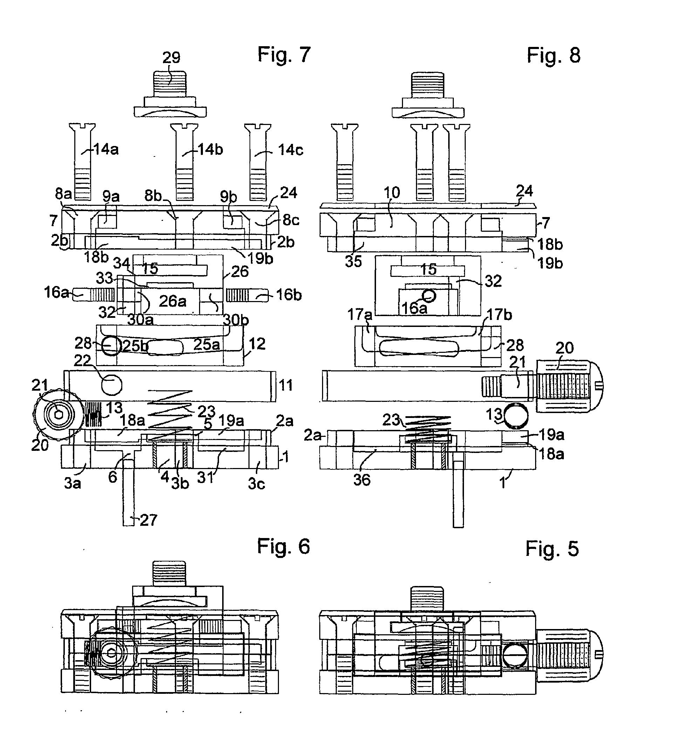

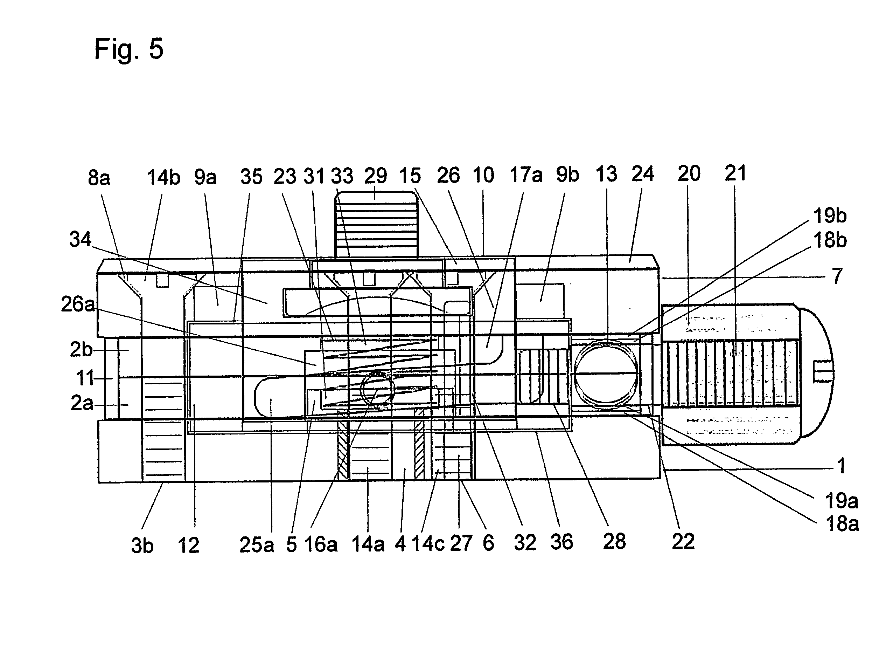

Innentubus 26 und Innenring 12 sind zwischen einer oberen Gehäuseplatte 7 und einer unteren Gehäuseplatte 1 eingebettet (siehe Fign. 5-8). Diese Gehäuseplatten 1 und 7 werden durch Schrauben 14a-c miteinander starr verbunden. Die untere Gehäuseplatte 1 weist mittig eine Stativgewindebohrung 4 auf, für die obere Gehäuseplatte 7 ist als vorteilhafte Ausführung eine Kork- oder Gummiauflage 24 vorgesehen, die als rutschfeste Kameraauflage dient. Zwischen unterer Gehäuseplatte 1 und der Aussparung 26a im Innentubus 26 ist eine Druckfeder 23 vorgesehen, die den Innentubus 26 durch ein Mittelloch 10 der oberen Gehäuseplatte 7 nach außen drückt - bis zum Anschlag der Stifte16a und 16b in entsprechen geformte Aussparungen 9a bzw. 9b an der Unterseite der oberen GehäusePlatte 7.

Weiterhin sieht die Ausführung der Erfindung einen Außenring 11 vor, der durch die Sockel 2a, 2b an der oberen und unteren Gehäuseplatte 7 und 1 zentriert wird. Dieser Ring hat im Wesentlichen zwei Funktionen:
Zum einen schließt er den gesamten Innenbereich der Aufnahmeeinheit 34 nach außen ab. Er ist um die Mittelachse der Gehäuseplatten 1 bzw. 7 drehbar und folgt damit der Drehbewegung des Verriegelungshebels 21, der durch den Außenring 11 zum Innenring 12 geführt wird.

Zum andern dient er dazu, eine zwischen den Sockeln 2a und 2b in den Aussparungen 18a und 18b der unteren und oberen Gehäuseplatten 1 und 7 liegend vorgesehene Sicherungsfeder 13 zu halten.

Das Arretieren der Adapter-/Kameraeinheit geschieht dabei folgendermaßen:
Für eine Verbindung der mit dem Adapterzapfen 29 versehenen nicht dargestellten Kamera und der Aufnahmeeinheit 34 ist zunächst der Verriegelungshebel 21 im Uhrzeigersinn in der Aussparung 18a bzw. 18b bis zum Anschlag an die Gehäuseplatten 1 und 7 zu bewegen (Fig. 4). Dabei wird die Sicherungsfeder 13 gespannt. Ein Mitdrehen des Innentubus 26 durch Reibung am Innenring 12 wird dabei durch mindestens einen Stoppstift 27 verhindert, der in der unteren Gehäuseplatte 1 in einer Bohrung 6 befestigt ist und durch eine Bohrung 32 im Innentubus 26 geführt wird. In dieser Position stehen die Öffnungen 17a und 17b des Innenrings 12 über den Stiften 16a und 16b, so dass der Innentubus 26 von der Druckfeder 23 durch das Mittelloch 10 aus der Gehäuseeinheit geschoben wird (Fig. 6). Gibt man den Verriegelungshebel 21 frei, drückt die Sicherungsfeder 13 ihn und damit auch den Innenring 12 in Gegenuhrzeigerrichtung zurück. Damit befinden sich die Öffnungen 17a und 17b nicht mehr unter den Stiften 16a und 16b am Innering 12.

Wird nun der Adapterzapfen 29 mit Kamera in die Einschuböffnung 15 des inneren Tubus 26 geschoben, kann der innere Tubus 26 nicht nach unten ausweichen, da sich dessen Verriegelungsstifte 16a bzw. 16b an der oberen Kante des Innenrings 12 abstützen (Fig. 6). Auf diese Weise ist ein schnelles und sicheres Einschieben des runden Adapterzapfens 29 in die blitzschuh-ähnlich ausgebildete Halterung in jeder horizontalen Kameraposition möglich.

Bei erneuter entgegengesetzter Betätigung des Hebels 21 dreht sich der Innenring 12 entsprechend zurück, und der innere Tubus 26 mit den Verriegelungsstiften 16a bzw. 16b, dem aufgenommenem Adapterzapfen 29 und der damit verbundenen Kamera kann mit den Stiften 16a und 16b über die durch die Hebelbewegung darunter positionierten Öffnungen 17a und 17b in die Aufnahmeeinheit 34 bis zum Anschlag der Kamera am oberen Gehäuseteil eingeschoben werden. Bei versehentlichem Loslassen des Verriegelungshebels 21 würde die Sicherungsfeder 13 dabei über die Hebel-Innenring-Verbindung die Schlitze 25a+b des Innenrings 12 sofort ein wenig über die Stifte 16a und 16b am inneren Tubus 26 führen, wodurch ein zufälliges Herausfallen der Kamera-Adapter-Einheit verhindert wird. Aus diesem Grund sind die Schlitze 25 am Anfang ein kleines Stück gerade ausgeführt, ehe die Schräge beginnt.

Durch das Herabdrücken des inneren Tubus 26 nach Einsetzen der Kamera-/Adaptereinheit wird der Stoppstift 27 aus seiner Bohrung 6 im inneren Tubus 26 herausgeführt und erfüllt auf diese Weise eine zweite Funktion: Er verhindert jegliches Verschieben des Adapterzapfens 29, solange die Kamera nicht fest verriegelt ist, läßt aber jede Drehbewegung um die Adapter-/Kameraachse weiterhin zu.

Um eine Arretierung der Kamera zu erreichen, wird der Verriegelungshebel 21 gegen den Uhrzeigersinn betätigt, so dass die Stifte 17a und 17b mit der Drehbewegung des Innenrings 12 in der Schräge der Schlitze 25 nach unten gedrückt werden, wobei sich der Innenring 12 stirnseitig an der oberen Gehäuseplatte 7 abstützt, wodurch gleichzeitig die zwischen Schlitz 25 und Stirnseite des Innenrings 12 vorhandene Wandung durch den Gegendruck der Anlagefläche des Innenrings 12 an der Unterseite des Gehäuseplatte 7 in der Aussparung 35 einen Gegendruck zur Kraft der Verriegelungsstifte 16 erfährt. Auf diese Weise wird über den inneren Tubus 26 die Kamera-Adaptereinheit gegen die Korkauflage 24 an der oberen Gehäuseplatte 7 gezogen und so mit der Aufnahmeeinheit 34 eine sehr feste Verbindung über eine große Kontaktfläche geschaffen.

Als zusätzliche Sicherung gegen Entriegelung sieht eine weitere vorteilhafte Ausführung der Erfindung einen drehbaren Griff 20 (siehe Fign. 3 und 13) am Verriegelungshebel 21 vor, mit dem dieser in jeder Position festgestellt werden kann.

Eine nicht dargestellte, weiter vereinfachte Ausführungsform sieht vor, dass der Außenring 11 und der Verriegelungshebel 21 entfallen, wobei die Schlitze 25 dann nur am inneren Umfang des Innenrings 12 ausgebildet sind und der Außenumfang des Innenrings 12 mit einer Rändelung oder Riffelung versehen unmittelbar als Angriffsfläche für das Verdrehen des Innenrings 12 gegenüber dem axial bewegbaren inneren Tubus 26 dient. Eine die Feder 13 ersetzende Feder könnte in diesem Fall beispielsweise als eine in einer Ringnut zwischen der oberen Gehäuseplatte 7 oder der unteren Gehäuseplatte 1 und dem Innenring 12 (dessen Bezeichnung dann etwas mißverständlich wäre, da er dann gleichzeitig einen Außenring bilden würde) wirksame Drehfeder ausgebildet sein. Sofern die Steigung der Schlitze 25 die Selbsthemmungsgrenze der gewählten Materialpaarung zwischen der Wandung der Schlitze 25 und den Verriegelungsstiften 16 unterschreitet, wäre auch die zusätzliche Arretierung über den Dreh- und Feststellgriff 20 entbehrlich, zumal bei dieser Variante kein vorstehender Verriegelungshebel 21 vorhanden ist, an dem man versehentlich hängenbleiben und dadurch ein Auflösen der Verriegelung bewirken könnte.

### Bezugszeichenliste

- 1: (untere) Gehäuseplatte
- 2a,b: Sockel (an 1 und 7, zwischen Außenring 11 und Innenring 12)
- 3a,b,c: Gewindebohrungen (für Verbindungsschrauben 14a-c
- 4: Stativgewindebohrung
- 5: Sockel (zwischen Stativgewindebohrung und innerem Tubus 26)
- 6: Bohrung (für Stoppstift)
- 7: (obere) Gehäuseplatte
- 8a,b,c: Bohrung (für Senkkopf-Verbindungsschrauben 14a-c)
- 9a,b: Aussparungen (für Verriegelungsstifte)
- 10: Mittelloch (in 7, für inneren Tubus 26)
- 11: Außenring
- 12: Innenring
- 13: Sicherheitsfeder (für Verriegelungshebel 21)
- 14a,b,c: Verbindungsschrauben (zwischen den Gehäuseplatte 1 und 7)
- 15: Einschuböffnung (an 26, für 29)
- 16a,b: Verriegelungsstifte
- 17a,b: Öffnungen (im Innenring 12 zur Einführung der Verriegelungsstifte 16)
- 18a,b: Aussparung in den Sockeln (von 1 und 7) für Verriegelungshebel 21 und Feder 13
- 19a,b: Aussparung in den Sockeln (von 1 und 7) für Verriegelungshebel 21
- 20: Dreh- und Festellgriff (am Verriegelungshebel 21)
- 21: Verriegelungshebel
- 22: Bohrung (an 11, für Verriegelungshebel 21)
- 23: Druckfeder (für inneren Tubus 26)
- 24: Gummi-oder Korkauflage (auf oberer Gehäuseplatte 7)
- 25a,b: Führungsschlitze (im Innenring 12 für Verriegelungsstifte 16)
- 26: (versenkbarer) innerer Tubus
- 26a: Aussparung (an 26)
- 27: Stoppstift
- 28: Gewindebohrung (an 12, für Verriegelungshebel 21)
- 29: Adapterzapfen
- 30a,b: Gewindebohrungen (an 26, für Verriegelungsstifte 16)
- 31: Aussparung an Sockel 5 für Druckfeder 23
- 32: Bohrung (an 26) für Stoppstift 27
- 33: Aussparung an Tubus 26 zur Führung der Druckfeder 23
- 34: Aufnahmeeinheit
- 35: Aussparung für Innenring 12 an Gehäuseplatte 7
- 36: Aussparung für Innentubus 26 und Innenring 12 an Gehäuseplatte 1

## Patentansprüche

1. Befestigungsvorrichtung zur Befestigung von Kameras und anderen optischen Geräten an Stativen oder zum Verbinden mit anderen Zubehörteilen, mit einem mit der Kamera bzw. den anderen optischen Geräten verbindbaren Adapterzapfen (29) und mit einer mit dem Stativ bzw. den anderen Zubehörteilen verbindbaren Aufnahmevorrichtung (34), die eine Öffnung (15) zur Aufnahme des Adapterzapfens (29) und eine drehbare Verriegelungsvorrichtung zum Verriegeln des Adapterzapfens aufweist, **gekennzeichnet durch** ein zylinderförmiges Teil (26), das in seiner axialen Richtung nach außen in eine über ein Gehäuseteil (7) der Aufnahmevorrichtung (34) vorstehende Position verschiebbar ist, wobei die Öffnung als Einschuböffnung (15) an dem axial verschiebbaren, zylinderförmigen Teil (26) derart ausgebildet ist, dass der Adapterzapfen (29) in Bezug auf das axial verschiebbare, zylinderförmige Teil radial in die Einschuböffnung (15) einführbar ist, wobei die Verriegelungsvorrichtung um eine in Richtung der axialen Erstreckung des axial verschiebbaren, zylinderförmigen Teils (26) verlaufende Drehachse drehbar ist und damit das zylinderförmige Teil in die Aufnahmevorrichtung einschiebbar ist.

2. Befestigungsvorrichtung nach Anspruch 1, **dadurch gekennzeichnet, dass** das axial verschiebbare, zylinderförmige Teil (26) von einer Feder (23) in die nach außen über das Gehäuseteil (7) vorstehende Position belastet ist.

3. Befestigungsvorrichtung nach einem der vorhergehenden Ansprüche, **dadurch gekennzeichnet, dass** das axial verschiebbare, zylinderförmige Teil (26) Teile (16a, 16b) der Verriegelungsvorrichtung aufweist.

4. Befestigungsvorrichtung nach Anspruch 3, **dadurch gekennzeichnet, dass** die Verriegelungsvorrichtung mehrere am Umfang des axial verschiebbaren zylinderförmigen Teils (26) verteilte Teile (16a, 16b) aufweist.

5. Befestigungsvorrichtung nach einem der vorhergehenden Ansprüche, **dadurch gekennzeichnet, dass** die Verriegelungsvorrichtung (21; 12, 25; 26, 16) einen konzentrisch an einem Gehäuseteil (1, 2) drehbar gelagerten Ring (12) aufweist.

6. Befestigungsvorrichtung nach Anspruch 5, **dadurch gekennzeichnet, dass** der konzentrisch drehbare Ring (12) Führungsmittel (25) mit einer Steigung in axialer Richtung aufweist, die mit Teilen (16) der Verriegelungsvorrichtung am axial verschiebbaren, zylinderförmigen Teil (26) zusammenwirken.

7. Befestigungsvorrichtung nach Anspruch 6, sofern dieser auch auf Anspruch 3 rückbezogen ist, **dadurch gekennzeichnet, dass** die Führungsmittel als Schlitze (25) ausgebildet sind, die an einer Stirnseite des Rings (12) Öffnungen (17a, 17b) für den Ein- und Austritt der am axial verschiebbaren, zylinderförmigen Teil (26) angeordneten Teile (16a, 16b) der Verriegelungsvorrichtung aufweisen.

8. Befestigungsvorrichtung nach einem der Ansprüche 5 bis 7, sofern dieser auch auf Anspruch 3 rückbezogen ist, **dadurch gekennzeichnet, dass** der drehbare Ring (12) mittels einer in Umfangsrichtung wirksamen Feder (13) in einer aus der Kopplungsstellung mit den am axial verschiebbaren, zylinderförimgen Teil (26) vorgesehenen Teilen (16a, 16b) der Verriegelungseinrichtung wegführenden und in eine Verriegelungsposition führenden Drehrichtung beaufschlagt wird.

9. Befestigungsvorrichtung nach einem der Ansprüche 5 bis 8, **dadurch gekennzeichnet, dass** der drehbare Ring (12) mit einem nach außen vorstehenden Verriegelungshebel (21) versehen ist.

10. Befestigungsvorrichtung nach den Ansprüchen 8 und 9, **dadurch gekennzeichnet, dass** die in Umfangsrichtung wirksame Feder (13) außen um den drehbaren Ring (12) angeordnet ist und auf den Verriegelungshebel (21) einwirkt.

11. Befestigungsvorrichtung nach einem der Ansprüche 9 oder 10, **dadurch gekennzeichnet, dass** der Verriegelungshebel (21) mit einer zusätzlichen Arretierungsvorrichtung (20) versehen ist.

## Claims

1. A fixing device for fixing cameras and other optical devices to stands or for connection to other accessories, with an adapter journal (29) which can be linked to the camera respectively the other optical devices and with a receiving device (34) which can be linked to the stand respectively the other accessories, which includes an opening (15) for receiving the adapter journal (29) and a rotatable locking device for locking the adapter journal, **characterised by** a cylindrical portion (26), which is mobile in its axial direction outwardly into a position protruding over a housing portion (7) of the receiving device (34), wherein the opening is designed as an insert opening (15) on the axially mobile, cylindrical portion (26) in such a way that the adapter journal (29) can be inserted radially into the insert opening (15) relative to the axially mobile cylindrical portion, wherein the locking device is rotatable around a rotational axis running in the direction of the axial extension of the axially mobile cylindrical portion (26), and hence the cylindrical portion can be inserted into the receiving device.

2. A fixing device according to claim 1, **characterised in that** the axially mobile, cylindrical portion (26) is loaded by a spring (23) into the position protruding outwardly over the housing portion (7).

3. A fixing device according to any of the preceding claims, **characterised in that** the axially mobile cylindrical portion (26) includes parts (16a, 16b) of the locking device.

4. A fixing device according to claim 3, **characterised in that** the locking device includes several parts (16a, 16b) distributed on the circumference of the axially mobile cylindrical portion (26).

5. A fixing device according to any of the preceding claims, **characterised in that** the locking device (21; 12, 25; 26, 16) includes a ring (12) mounted rotatably and concentrically on a housing portion (1,2).

6. A fixing device according to claim 5, **characterised in that** the concentrically rotatable ring (12) includes guiding means (25) ascending in the axial direction, which cooperate with parts (16) of the locking device on the axially mobile cylindrical portion (26).

7. A fixing device according to claim 6, inasmuch as said device is also related to claim 3, **characterised in that** the guiding means are designed as slits (25),which present openings (17a, 17b) on a front face of the ring (12), for the deployment and retraction of the parts (16a, 16b) of the locking device arranged on the axially mobile cylindrical portion (26).

8. A fixing device according to one of the claims 5 to 7, inasmuch as said device is also related to claim 3, **characterised in that** the rotatable ring (12) is subjected to an active spring (13) in the circumferential direction into a rotation direction leading away from the coupling position with the parts (16a, 16b) of the locking system provided on the axially mobile cylindrical portion (26) and into a rotation direction leading to a locking position with said parts.

9. A fixing device according to one of the claims 5 to 8, **characterised in that** the rotatable ring (12) is provided with a locking lever (21) protruding outwardly.

10. A fixing device according to the claims 8 and 9, **characterised in that** the spring (13) active in the circumferential direction is arranged externally around the rotatable ring (12) and acts upon the locking lever (21).

11. A fixing device according to one of the claims 9 or 10, **characterised in that** the locking lever (21) is provided with an additional interlocking system (20).

## Revendications

1. Dispositif de fixation permettant la fixation de caméras et autres appareils optiques sur des trépieds ou permettant un raccordement avec d'autres accessoires, pourvu d'un tourillon adaptateur (29) pouvant se connecter à la caméra ou aux autres appareils optiques et d'un dispositif de réception (34) pouvant se connecter au trépied ou aux autres accessoires, présentant une ouverture (15) destinée à recevoir le tourillon adaptateur (29) et un dispositif de verrouillage rotatif permettant de verrouiller le tourillon adaptateur, **caractérisé par** une partie cylindrique (26), mobile dans sa direction axiale vers l'extérieur pour adopter une position saillante au-dessus d'une partie boîtier (7) du dispositif de réception (34), tandis que l'ouverture fait office d'ouverture d'introduction (15) sur la partie cylindrique mobile axialement (26) de telle sorte que le tourillon adaptateur (29) peut être guidé radialement dans l'ouverture d'introduction (15) par rapport à la partie cylindrique mobile axialement, dans lequel le dispositif de verrouillage est rotatif par rapport à un axe de rotation s'étendant dans le sens du tronçon axial de la partie cylindrique mobile axialement (26), et ainsi la partie cylindrique peut être introduite dans le dispositif de réception.

2. Dispositif de fixation selon la revendication 1, **caractérisé en ce que** la partie cylindrique mobile axialement (26) est contrainte par un ressort (23) pour adopter la position saillante vers l'extérieur au-dessus de la partie boîtier (7).

3. Dispositif de fixation selon l'une quelconque des revendications précédentes, **caractérisé en ce que** la partie cylindrique mobile axialement (26) présente des pièces (16a, 16b) du dispositif de verrouillage.

4. Dispositif de fixation selon la revendication 3, **caractérisé en ce que** le dispositif de verrouillage présente plusieurs pièces (16a, 16b) réparties sur la circonférence de la partie cylindrique mobile axialement (26).

5. Dispositif de fixation selon l'une quelconque des revendications précédentes, **caractérisé en ce que** le dispositif de verrouillage (21; 12, 25; 26, 16) présente une bague (12) montée de manière rotative et concentrique sur une partie boîtier (1,2).

6. Dispositif de fixation selon la revendication 5, **caractérisé en ce que** la bague rotative concentriquement (12) présente des moyens de guidage (25) ascendant axialement, et coopérant avec des pièces (16) du dispositif de verrouillage sur la partie cylindrique mobile axialement (26).

7. Dispositif de fixation selon la revendication 6, se rapportant également à la revendication 3, **caractérisé en ce que** les moyens de guidage sont en forme de fentes (25), présentant des ouvertures (17a, 17b) sur une face avant de la bague (12) permettant la rétraction et la sortie des pièces (16a, 16b) du dispositif de verrouillage situées sur la partie cylindrique mobile axialement (26).

8. Dispositif de fixation selon l'une quelconque des revendications 5 à 7, se rapportant également à la revendication 3, **caractérisé en ce que** la bague rotative (12) est soumise à un sens de rotation écartant de la position d'accouplement avec les pièces (16a, 16b) du dispositif de verrouillage prévues sur la partie cylindrique mobile axialement (26) et à un sens de rotation amenant dans une position de verrouillage avec lesdites pièces, à l'aide d'un ressort (13) agissant dans le sens de la circonférence.

9. Dispositif de fixation selon l'une quelconque des revendications 5 à 8, **caractérisé en ce que** la bague rotative (12) est pourvue d'un levier de verrouillage (21) saillant vers l'extérieur.

10. Dispositif de fixation selon les revendications 8 et 9, **caractérisé en ce que** le ressort (13) opérant dans le sens de la circonférence est disposé à l'extérieur autour de la bague rotative (12) et agit sur le levier de verrouillage (21).

11. Dispositif de fixation selon l'une quelconque des revendications 9 ou 10, **caractérisé en ce que** le levier de verrouillage (21) est pourvu d'un dispositif de solidarisation supplémentaire (20).
